# EUROPÄISCHE PATENTSCHRIFT

(11) **EP 2 815 486 B1**
(45) Veröffentlichungstag und Bekanntmachung des Hinweises auf die Patenterteilung: **08.01.2020**
(21) Anmeldenummer: 13734958.5
(22) Anmeldetag: 13.02.2013
(51) Int. Cl.: H02K 3/52

(54) **STATORANORDNUNG UND ELEKTRISCHE MASCHINE**
STATOR ARRANGEMENT AND ELECTRIC MACHINE
DISPOSITIF STATOR ET MOTEUR ÉLECTRIQUE

(30) Priorität: 13.02.2012 DE 102012202131
(43) Veröffentlichungstag der Anmeldung: 24.12.2014
(73) Patentinhaber: Brose Fahrzeugteile GmbH & Co. Kommanditgesellschaft, Würzburg, 97076 Würzburg (DE)
(72) Erfinder: KOCH, Kevin, 90766 Fürth (DE); BELZNER, Veronique, 97318 Kitzingen (DE); MARTIN, Christian, 96342 Stockheim (DE)
(74) Vertreter: Isarpatent
(86) Internationale Anmeldenummer: PCT/EP2013/000414
(87) Internationale Veröffentlichungsnummer: WO 2013/120603

(56) Entgegenhaltungen:
- WO-A1-2011/108735
- DE-A1- 10 318 816
- DE-A1-102009 001 830
- DE-A1-102010 033 699

## Beschreibung

### GEBIET DER ERFINDUNG

Die vorliegende Erfindung betrifft eine Statoranordnung und eine elektrische Maschine, insbesondere für den Automobilbereich.

### TECHNISCHER HINTERGRUND

Elektrische Maschinen, z. B. Elektromotoren, werden im Automobilbereich für die unterschiedlichsten Zwecke und Anwendungen eingesetzt. Beispielsweise werden Elektromotoren zum Antreiben von Kühlerlüftermodulen verwendet. Ferner werden Elektromotoren auch als Antrieb für den Betrieb von Fensterhebern, Gurtstraffern, Sitzverstellungen, Außenspiegeln, elektrische Feststellbremsen, Getriebe-Aktuatoriken, Ölpumpen, zum Kuppeln und Schalten in einen Doppelkupplungsgetriebe und dergleichen eingesetzt.

Solche Elektromotoren weisen im Allgemeinen einen Stator und einen im Stator drehbar gelagerten Rotor auf. Der Stator weist üblicherweise einen Statorkern auf, welcher eine Vielzahl von Statorzähnen ausbildet, um welche in bekannter Weise Statorwicklungen gewickelt sind. Die um die Statorzähne gewickelten Statorwicklungen erzeugen bei einem Stromfluss durch den Wicklungsdraht ein elektromagnetisches Feld, welches in Zusammenwirken mit dem Rotor diesen in Drehbewegen versetzt.

Aktuell existiert eine Vielzahl von Möglichkeiten, die Statorwicklungen mit Kontaktanschlüssen zu verbinden, die dann elektrisch mit einer Anschlussbuchse bzw. einer entsprechenden Kontaktiereinrichtung verbunden werden. Die Kontaktierung des Wicklungsdrahtes der Statorwicklung mit einer Vielzahl von Einzelkontakten gestaltet sich indes sehr schwierig und aufwändig. Die Einzelkontakte müssen hierzu vor dem Wickeln in einer Isolierendscheibe oder Taschen fixiert werden. Während des Wickelvorganges, beispielsweise mittels einer Nadelwicklung bzw. eines Flyers, muss ein jeweiliger Draht in eine definierte Position in die Nähe oder an die Einzelkontakte geführt werden, um diese dann elektrisch und mechanisch miteinander zu verbinden. Ferner ist es bisweilen erforderlich, dass mehrere Statorwicklungen auf den Statorzähnen miteinander verbunden werden. Diese Verbindung geschieht üblicherweise über den Draht der einzelnen Statorwicklungen und birgt daher Nachteile einer komplizierten Verlegung von einem Statorzahn zum einem zu verbindenden benachbarten Statorzahn.

Die US 2005 088049 A beschreibt einen Stator für einen elektrischen Motor, der ein ringförmiges Statorblechpaket aufweist. Eine ringförmige Verbindungseinheit ist auf einer Stirnseite des Statorpakets vorgesehen. Die Verbindungseinrichtung weist eine Tragestruktur auf, in welcher Ausnehmungen ausgebildet sind. In diesen Ausnehmungen sind elektrisch isolierte Verbindungsringe, welche einzelne Statorzähne miteinander verbinden, vorgesehen.

Die WO 2011/108735 A1 beschreibt einen Stator, welcher aus Statorsegmenten gebildet ist und einen Motor. Der Stator weist Kontaktleiter auf, welche gebogene Abschnitte aufweisen.

Die DE 10 2010 033 699 A1 beschreibt einen Schaltkopf für Elektromotoren, mit einer Wicklung und Kontaktstücken, die mit Anschlussdrähten der Wicklung elektrisch leitend verbunden sind, und mit Kontakten für Anschlusslitzen, wobei die Kontakte Teil von Kontaktringen sind und nach Art eines Bajonettverschlusses in die Kontaktstücke einsetzbar sind.

### ZUSAMMENFASSUNG DER ERFINDUNG

Vor diesem Hintergrund ist es eine Aufgabe der vorliegenden Erfindung, eine Statoranordnung sowie eine elektrische Maschine zur Verfügung zu stellen, welche eine verbesserte Kontaktierung der Statorwicklungen ermöglicht.

Diese Aufgabe wird erfindungsgemäß durch eine Statoranordnung mit den Merkmalen des Patentanspruchs 1 und durch eine elektrische Maschine mit den Merkmalen des Patentanspruchs 8 gelöst.

Demgemäß ist vorgesehen:
- Eine Statoranordnung für eine elektrische Maschine, mit einem Statorblechpaket, mit einer Vielzahl von Statorwicklungen, mit einer Kontaktiereinrichtung, welche zumindest einen Kontaktleiter aus Blechmaterial aufweist, welcher dazu ausgebildet ist, zumindest zwei Statorwicklungen elektrisch miteinander zu verbinden, wobei ein jeweiliger Kontaktleiter zumindest eine Anschlussfahne zum elektrischen Ankoppeln einer externen Anschlusseinheit an die Kontaktiereinrichtung sowie zumindest einen Haken zum Aufnehmen eines Wicklungsdrahtendes einer jeweils mit dem Kontaktleiter elektrisch verbundenen Statorwicklung aufweist, wobei der Haken durch erstes Falten des Blechmaterials des Kontaktleiters zur Verdopplung der Dicke des Blechmaterials des Kontaktleiters, und durch zweites Falten des Blechmaterials zur Ausbildung der Kontur des Hakens ausgebildet ist.
- Ferner ist eine elektrische Maschine vorgesehen, mit einer erfindungsgemäßen Statoranordnung und mit einem innerhalb einer zylinderförmigen Ausnehmung der Statoranordnung angeordneten und drehbar gelagerten Rotor.

Die der vorliegenden Erfindung zugrunde liegende Idee besteht darin, anstatt jede Statorwicklung mit einem Draht zu verbinden und die Enden der Drahtwicklung mit Einzelkontakten zu verbinden, durchgehende Kontaktleiter zu verwenden, welche jeweils mehrere Statorwicklungen miteinander verbinden. Diese Kontaktleiter weisen Anschlussfahnen zur elektrischen Kontaktierung einer Anschlusseinheit sowie Haken auf, um zur Herstellung eines elektrischen Kontakts die Enden der Drahtwicklung (Statorwicklung) aufzunehmen. Durch das Aufnehmen des Endes des Wicklungsdrahtes in einen solchen Haken kann das Kontaktieren der Statorwicklung auf sehr einfache Weise erfolgen. Ferner entsteht dadurch ein deutlich vereinfachtes Wickelschema für den gesamten Stator, da die Wicklungsdrähte nun nicht mehr auf komplizierte, aufwändige und platzverbrauchende Weise auf einer der Stirnseiten des Stators verlegt werden müssen.

Die erfindungsgemäße Statoranordnung kann in unterschiedlichen Arten von elektrischen Maschinen, beispielsweise in Generatoren und Motoren, verwendet werden.

Weitere vorteilhafte Ausgestaltungen und Weiterbildungen ergeben sich aus den weiteren Unteransprüchen sowie aus der Beschreibung unter Bezugnahme auf die Figuren der Zeichnung.

Der Haken ist durch zweifaches Falten des Materials des Kontaktleiters ausgebildet. Das Kontaktleitermaterial wird zunächst ein erstes Mal gefaltet, um die Dicke des Kontaktleiters zu verdoppeln. Anschließend wird das Kontaktleitermaterial ein zweites Mal gefaltet, um die Kontur eines Hakens auszubilden. Auf diese Weise ist der Haken stabil genug, um mit dem Draht der Statorwicklung verschweißt zu werden. Ein weiterer Vorteil besteht darin, dass das Ende eines Wicklungsdrahtes auch besonders sicher in den Haken eingeklemmt werden kann.

In einer weiteren vorteilhaften Ausgestaltung ist ein jeweiliges Wicklungsdrahtende kraftschlüssig in einen dem Wicklungsdrahtende zugeordneten Haken eingeklemmt oder eingelegt. Die kraftschlüssige Verbindung ist besonders einfach, da keine zusätzlichen Arbeitsschritte zum Verbinden des Drahtwicklungsendes mit dem Kontaktleiter nötig sind.

Der Draht sollte beim Wickeln auf den Statorzähnen oder den Zahnisolierabschnitten möglichst horizontal durch die Ausbrüche und die Haken geführt werden, wodurch ein Verrutschen unwahrscheinlich wird. Zudem wird der Haken durch die Spannung des Drahtes bei horizontaler Lage nicht axial verbogen.

Die Reibung, welche durch das Einklemmen des Drahtwicklungsendes in dem Haken entsteht, ist ausreichend, um das Wicklungsdrahtende sicher in dem Haken zu fixieren. Je nach Material und Anwendungsgebiet kann die Steifigkeit des Hakens größer oder kleiner gewählt werden. Statt dem kraftschlüssigen Einklemmen kann zusätzlich oder alternativ auch eine formschlüssige und/oder stoffschlüssige Verbindung zwischen dem Wicklungsdrahtende und dem Haken vorgesehen sein. In einer weiteren vorteilhaften Ausgestaltung der Statoranordnung ist das Wicklungsdrahtende mit dem Haken heißverstemmt. Auf diese Weise entsteht eine stoffschlüssige Verbindung zwischen dem Wicklungsdrahtende und dem Haken.

Dadurch wird das Wicklungsdrahtende noch sicherer in dem Haken fixiert. Die Haken dienen in dieser Ausführungsform lediglich als Positionierhilfe für den späteren Heißverstemmprozess. Andere Möglichkeiten, das Wicklungsdrahtende mit dem Haken zu fixieren, wie beispielsweise Nieten, Kleben, Schweißen, Löten, etc., sind selbstverständlich auch möglich und vorteilhaft. Auf diese Weise kann eine gasdichte elektrische Verbindung zwischen dem Wicklungsdrahtende und dem Haken ausgebildet werden.

In einer weiteren Ausführungsform weist der Kontaktleiter zumindest zwei Haken und vorzugsweise genau zwei Haken, vorzugsweise an gegenüberliegenden Enden des jeweiligen Kontaktleiters, auf. Durch diese Ausgestaltung ist es auf einfache Weise möglich, mehrere Wicklungsdrahtenden mit dem Kontaktleiter elektrisch zu verbinden. Auf diese Weise können auch die Herstellungskosten zusätzlich gesenkt werden.

In einer weiteren Ausführungsform ist der Haken vorzugsweise einteilig oder einstückig an der Anschlussfahne des Kontaktleiters ausgebildet. Auf diese Weise kann der Wirkungsgrad des Stators erhöht werden, da der Widerstand aufgrund der geringen Distanz zwischen der Anschlussfahne und dem Wicklungsdrahtende besonders gering ist. Auch die mechanische Stabilität ist dadurch erhöht und der Haken kann nicht auf einfache Weise abgerissen werden.

In einer weiteren Ausführungsform weist die Kontaktiereinrichtung ein Trägerteil zur Aufnahme der Kontaktleiter auf, welches aus einem Kunststoff ausgebildet ist. Vorzugsweise ist das Trägerteil aus einem glasfaserverstärktem Kunststoff ausgebildet, beispielsweise aus PA 6.6 GF30. Das Trägerteil dient dem Zweck, die Kontaktleiter vorzugsweise formschlüssig aufzunehmen, zu halten und zu fixieren. Ferner werden die Anschlussfahnen durch das Trägerteil ausgerichtet. Durch diese Ausgestaltung kann die Kontaktiereinrichtung besonders stabil und dennoch sehr leicht ausgebildet werden. Andere Materialien, wie beispielsweise Elastomere, Duroplaste, etc., sind auch möglich.

Gemäß der Erfindung ist der Kontaktleiter aus einem Blech, vorzugsweise aus einem gestanzten Blech, gefertigt. Als Blech wird hier ein Metall verstanden, welches eine Dicke von weniger als 5 mm, vorzugsweise weniger als 3 mm aufweist und elektrisch leitfähig ist. Als Blechmaterial kann beispielsweise eine Stahllegierung oder eine Aluminiumlegierung verwendet werden. Die Kontaktleiter werden vorzugsweise aus dem Blechmaterial gestanzt oder mittels einer Lasereinrichtung aus dem Blechmaterial herausgeschnitten. Auch ein Wasserstrahlabrasivschneiden ist möglich. Durch die Ausbildung der Kontaktleiter aus einem Blech können die Herstellungskosten der Statoranordnung der elektrischen Maschine deutlich gesenkt werden.

In einer weiteren Ausgestaltung der Erfindung ist der Kontaktleiter aus Bronze gefertigt. Beispielsweise ist der Kontaktleiter aus CuSn6 ausgebildet. In einer weiteren bevorzugten Ausgestaltung ist der Kontaktleiter zusätzlich versilbert, beispielsweise mit einer 1-3 µm dicken Versilberungsschicht, welche beispielsweise durch Galvanisieren auf den Kontaktleiter aufgetragen werden kann. Auch eine Unternickelung des Kontaktleiters ist möglich. Beispielsweise können 2-3 µm Unternickelung für den Kontaktleiter verwendet werden. Auf diese Weise ist die Korrosionsbeständigkeit des Kontaktleiters erhöht. Dadurch kann die Lebensdauer der Statoranordnung erhöht werden. Andere elektrische leitfähige Materialien für die Ausbildung des Kontaktleiters sind selbstverständlich auch möglich. Beispielsweise kann der Kontaktleiter auch aus einer Kupferlegierung oder einer Eisenlegierung ausgebildet sein.

In einer weiteren Ausführungsform der Erfindung bildet das Statorblechpaket eine Vielzahl von Statorzähnen aus, auf denen eine Vielzahl von Statorwicklungen vorgesehen ist. Die Statorzähne weisen Rillen in Wicklungsrichtung des jeweiligen Wicklungsdrahts auf, welche ein Verrutschen der Statorwicklung vom jeweiligen Statorzahn verhindern. Beispielsweise weist die Kontaktiereinrichtung Zahnisolierabschnitte auf, welche das obere Viertel oder die obere Hälfte des Statorzahnes ausbilden. Das obere Viertel des Statorzahnes ist dabei halbkreisförmig ausgebildet. Dieses obere Viertel ist in einer Ausführungsform mit Rillen versehen, welche in gleichmäßigen Abständen in radialer Richtung auf dem Statorzahnabschnitt der Kontaktiereinrichtung ausgebildet sind. Ferner ist auf der gegenüberliegenden Seite des Statorblechpaketes eine Isolierendscheibe vorgesehen, welche ebenfalls Zahnisolierabschnitte aufweist, welche das untere Viertel oder die untere Hälfte eines Statorzahnes ausbilden. Auch die Zahnisolierabschnitte der Isolierendscheibe können in einer Ausführungsform mit Rillen versehen sein, zwischen denen die Statorwicklung aufgenommen wird. Bei einem Wickeln der Statorwicklung wird der Draht nun formschlüssig zwischen den Rillen gehalten, so dass ein Verrutschen der Statorwicklung vom Statorzahn während des Wickelns verhindert wird. Auf diese Weise werden Fehler bei der Statorherstellung vermieden, so dass ein geringer Ausschuss produziert wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch einzelne Aspekte der als Verbesserung oder Ergänzungen zu der jeweiligen Grundform der vorliegenden Erfindung hinzufügen.

### KURZE BESCHREIBUNG DER FIGUREN

Die vorliegende Erfindung wird nachfolgend anhand der in den schematischen Figuren der Zeichnungen angegebenen Ausführungsbeispiele näher erläutert. Es zeigen dabei:
- Fig. 1: eine perspektivische Explosionsansicht einer Statoranordnung;
- Fig. 2: verschiedene Ansichten einer erfindungsgemäßen Statoranordnung mit Statorwicklungen;
- Fig. 3: verschiedene Ansichten einer erfindungsgemäßen Statoranordnung ohne Statorwicklungen;
- Fig. 4: einen Kontaktleiter für eine erfindungsgemäße Statoranordnung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleichwirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

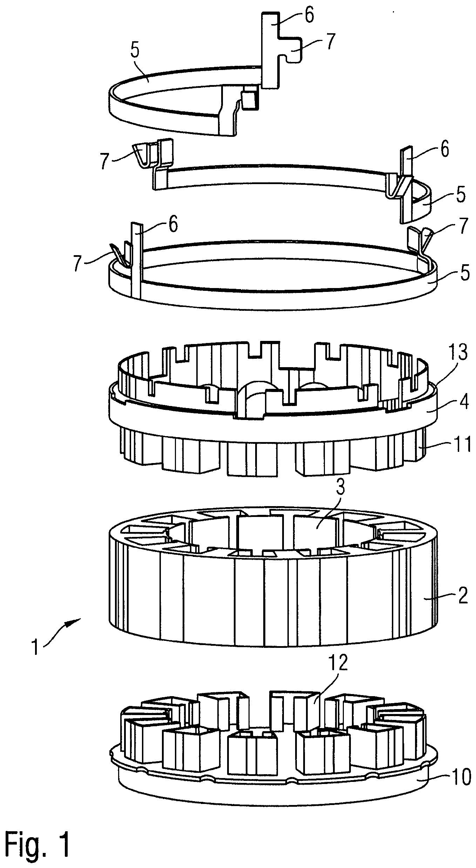

Fig. 1 zeigt eine perspektivische Explosionsansicht einer Statoranordnung 1. Die Statoranordnung 1 ist für eine elektrische Maschine ausgebildet, beispielsweise einen elektrischen Drehstrommotor oder einen elektrischen Drehstromgenerator. Die Statoranordnung 1 weist ein Statorblechpaket 2 auf, welches eine Vielzahl von Statorzähnen 3 aufweist. Das Statorblechpaket 2 ist aus einer Vielzahl von gestanzten Blechen ausgebildet, welche miteinander elektrisch und mechanisch verbunden sind. Andere Ausgestaltungen eines Stators beispielsweise eine einstückige Ausbildung, sind selbstverständlich auch möglich.

Die Statorzähne 3 des Statorblechpakets 2 dienen dazu, eine Statorwicklung aufzunehmen. Die Statorwicklungen werden um die Statorzähne 3 gewickelt.

Über dem Statorblechpaket 2 ist eine Kontaktiereinrichtung 4 dargestellt. Die Kontaktiereinrichtung 4 ist beispielsweise aus einem Kunststoff ausgebildet. Die Kontaktiervorrichtung 4 weist Zahnisolierabschnitte 12 auf, welche form- und kraftschlüssig mit entsprechenden Ausnehmungen im Statorblechpaket 2 verbunden werden können. Ferner weist die Kontaktiervorrichtung 4 eine Vielzahl von Ausnehmungen 13 auf, welche zur Aufnahme der Kontaktleiter 5 ausgebildet sind.

Die Kontaktleiter 5 sind oberhalb der Kontaktiereinrichtung 4 dargestellt. In dieser Ausführungsform werden drei kontaktleiter 5 durch die Aufnahme 13 der Kontaktiereinrichtung 4 aufgenommen. Die Kontaktleiter 5 sind beispielsweise aus einer Metalllegierung ausgebildet. Beispielsweise sind die Kontaktleiter 5 aus einer Bronzelegierung ausgebildet. Die Kontaktleiter 5 weisen eine halbkreisförmige Form auf.

Die Kontaktleiter 5 weisen jeweils Anschlussfahnen 6 auf, welche zur Kontaktierung einer externen Anschlusseinheit (hier nicht dargestellt) ausgebildet sind. Die Anschlussfahnen 6 erstrecken sich in axialer Richtung der Statoranordnung 1.

Ferner weisen die Kontaktleiter 5 Haken 7 auf, in welchen die Wicklungsdrahtenden 14 der Statorwicklungen 9 eingelegt und/oder eingeklemmt werden können. Die Haken 7 sind vorzugsweise an den Anschlussfahnen 6 der Kontaktleiter 5 ausgebildet und stehen von diesen ab. In dieser Ausführungsform weist jeder Kontaktleiter 5 jeweils zwei Haken 7 auf. Die Haken 7 sind seitlich an den Kontaktleitern 5 angeordnet und erstrecken sich in radialer Richtung.

Des Weiteren ist unterhalb des Statorblechpakets 2 eine Isolierendscheibe 10 dargestellt, welche das untere Ende der Statoranordnung 1 ausbildet. Die Isolierendscheibe 10 weist Zahnisolierabschnitte 11 auf, welche einen unteren Teil der Statorzähne bedecken und elektrisch isolieren, und um welche die Statorwicklung gewickelt wird.

In der dargestellten Ausführungsform sind drei Kontaktleiter 5 dargestellt. Es ist selbstverständlich möglich, dass mehr als drei oder weniger als drei Kontaktleiter 5 verwendet werden, je nach Anwendungsgebiet und Ausführungsform der elektrischen Maschine bzw. der Statoranordnung 1.

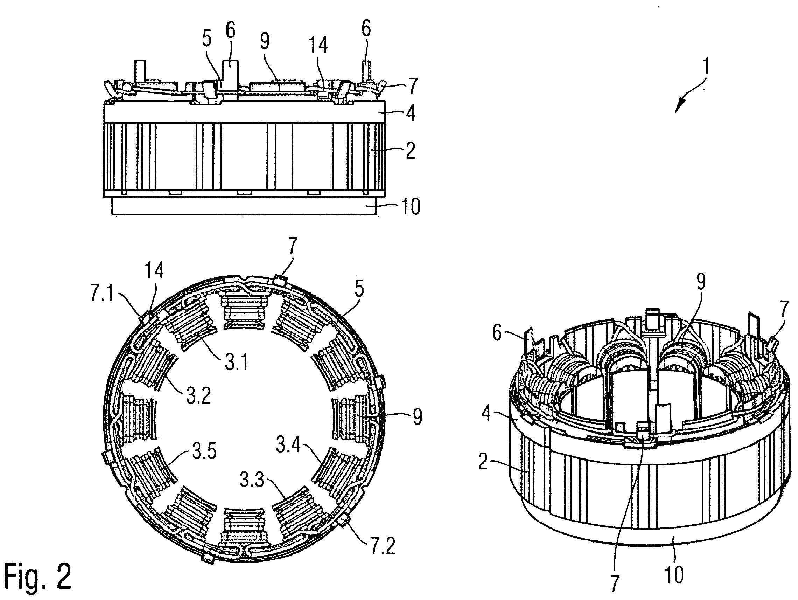

Fig. 2 stellt verschiedene Ansichten der Statoranordnung 1 mit Statorwicklungen 9 dar. Oben links in Fig. 2 ist eine Seitenansicht der Statoranordnung 2 dargestellt. Unten links ist eine Draufsicht der Statoranordnung 1 dargestellt. Rechts unten ist eine perspektivische Ansicht der Statoranordnung 1 dargestellt.

Die Statorzähne 3 des Statorblechpakets 2 sind mit Statorwicklungen 9 versehen. In der dargestellten Ausführungsform wird für die Statorwicklungen 9 der Statorzähne 3.1 und 3.2 ein einstückiger Draht verwendet. Das Wicklungsende 14 der Statorwicklung 9 ist in den Haken 7.1 eines Kontaktleiters 5 eingeklemmt. Auch die Statorwicklung 9 der Statorzähne 3.3 und 3.4 ist aus einem einstückigen Draht ausgebildet. Das Ende dieser Statorwicklungen 9 ist in den Haken 7.2 des Kontaktleiters 5 eingeklemmt. Somit werden die Statorwicklungen 9 der Statorzähne 3.1, 3.2, 3.3 und 3.4 elektrisch miteinander gekoppelt. Auf diese Weise ergibt sich eine sehr einfache Verschaltung der Statorwicklungen 9 ohne mehrfach überkreuzte Statorwicklungen 9. Die Statorwicklungen 9 können auf diese Weise sehr einfach um die Statorzähne 3 gewickelt werden. Ein kompliziertes Verlegen der Wicklungsdrahtenden 14 ist nicht erforderlich. Diese Ausgestaltung eignet sich besonders für Nadelwicklungen.

Selbstverständlich ist es möglich, andere Ausgestaltungen der Statoranordnung 1 in einer elektrischen Maschine zu verwenden. Beispielsweise können die Kontaktleiter 5 mehr als zwei Haken 7.1, 7.2 aufweisen. Beispielsweise könnte ein Kontaktleiter 5 derart ausgebildet sein, dass er die Statorwicklungen 9 der Statorzähne 3.1, 3.3 und 3.5 miteinander elektrisch koppelt. Auch die Anzahl der Anschlussfahnen 6 kann dem jeweiligen Anwendungsgebiet bzw. der jeweiligen Ausgestaltung der elektrischen Maschine angepasst werden.

In der perspektivischen Darstellung in der rechten unteren Seite der Fig. 2 und in der oben links dargestellten Seitenansicht der Statoranordnung 1 kann man gut erkennen, dass sich die Wicklungsenden 14 der Statorwicklung 9 in radialer Richtung in nur einer Ebene befinden. Ferner weist diese Ausgestaltung keine Überkreuzungen von Statorwicklungen 9 auf. Auf diese Weise wird die axiale Ausdehnung und die radiale Ausdehnung der Statoranordnung 1 minimiert. Dadurch können Beschädigungen, welche beispielsweise beim Einpressen der Statoranordnung 1 in einem Gehäuse durch mechanischen Druck auf überkreuzte Statorwicklungen 9 entstehen, gänzlich vermieden werden.

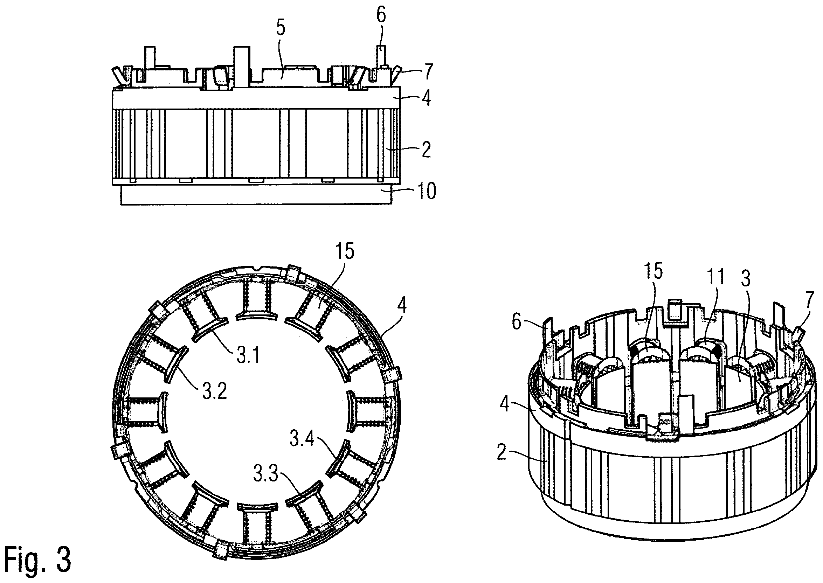

Fig. 3 stellt verschiedene Ansichten der Statoranordnung 1 ohne Statorwicklung 9 dar. Links oben in der Fig. 3 ist eine Seitenansicht der Statoranordnung 1 dargestellt. Links unten ist eine Draufsicht der Statoranordnung 1 dargestellt. Rechts unten ist eine perspektivische Darstellung der Statoranordnung 1 dargestellt.

In den verschiedenen Ansichten der Fig. 3 erkennt man, dass an der Kontaktiereinrichtung 4 halbkreisförmige Abschnitte 11 vorgesehen sind. Die halbkreisförmigen Zahnisolierabschnitte 11 bilden den oberen Abschnitt eines Statorzahns 3 und isolieren diesen elektrisch. Auch auf der Isolierendscheibe 10 sind - wie in Fig. 1 gezeigt - halbkreisförmige Zahnisolierabschnitte 12 ausgebildet, welche den unteren Abschnitt eines Statorzahns 3 ausbilden und diesen elektrisch isolieren. Durch die halbkreisförmige Ausbildung der Zahnisolierabschnitte 11 und 12 kann das Bewickeln sehr einfach erfolgen. Auf den Zahnisolierabschnitten 11 und 12 können an beiden Seiten eine Reihe von Rillen 15 vorgesehen sein, mittels welchen die Statorwicklung 9 beim Aufwickeln auf die Statorzähne 3 fixiert werden können. Dadurch wird ein Verrutschen der Statorwicklung 9 vom Statorzahn 3 während des Wickelns der Statorwicklung 9 vermieden.

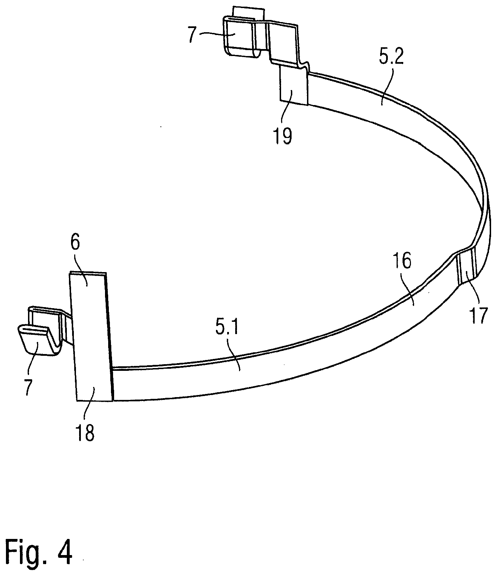

Fig. 4 stellt einen Kontaktleiter 5 dar. Der Kontaktleiter 5 wird beispielsweise aus einem Blechmaterial ausgestanzt und dann in einem weiteren Verfahrensschritt in die gewünschte Form, welche in Fig. 4 dargestellt ist, umgeformt. Der Kontaktleiter 5 weist einen ersten Mittelabschnitt 5.1 und einen zweiten Mittelabschnitt 5.2 auf, welche an einem Knick 17 aneinander angrenzen. Durch den Knick 17 sind die beiden Mittelabschnitte 5.1, 5.2 radial zueinander versetzt. Der Knick 17 dient dazu, Raum für einen weiteren Kontaktleiter 5 zu schaffen. Wie in den Figuren 2, 3 ersichtlich ist, werden die Kontaktleiter 5 in einer Ebene in der Ausnehmungen 13 der Kontaktiereinrichtung 4 aufgenommen. Durch den Knick 17 ist es möglich, dass die Kontaktleiter 5 in einer Ebene angeordnet werden.

Wie in Fig. 4 ersichtlich ist, ist an einem Ende 18 des Kontaktleiters 5 eine Anschlussfahne 6 ausgebildet. Die Anschlussfahne 6 dient der elektrischen Kontaktierung einer externen Anschlusseinheit, welche den Stator mit elektrischer Energie versorgt oder von dem als Generator betriebenen Elektromotor elektrische Energie dem Stator entzieht. An der Anschlussfahne 6 ist seitlich ein Haken 7 vorgesehen. Der Haken 7 wird durch zweifaches Falten des Kontaktleitermaterials gebildet. Die erste Faltung dient der Steigerung der Dicke des Kontaktleitermaterials und die zweite Faltung dient der Formgebung des Hakens 7. Auf diese Weise wird die Dicke des Hakens 7 erhöht, so dass dieser geeignet ist, mit dem Wicklungsende 14 der Statorwicklung 9 durch Schweißen verbunden zu werden. Am gegenüberliegenden Ende 19 des Kontaktleiters 5 ist ein zweiter Haken 7 vorgesehen. Auch dieser Haken 7 dient der Aufnahme eines entsprechenden Wicklungsdrahtendes 14.

In der dargestellten Ausführungsform des Kontaktleiters 5 in Fig. 4 sind zwei Haken 7 und ein Knick 17 vorgesehen. Selbstverständlich ist es möglich, dass der Kontaktleiter 5 nur einen Haken 7 aufweist und keinen Knick 17. Ferner ist es auch möglich, dass der Kontaktleiter 5 mehr als zwei Haken und mehr als einen Knick 17 aufweist. Je nach Anwendungsgebiet und Ausgestaltung der elektrischen Maschine kann die Anzahl der Haken 7 und die Anzahl der Knicke 17 angepasst werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### BEZUGSZEICHENLISTE

- 1: Statoranordnung
- 2: Statorblechpaket
- 3: Statorzähne
- 3.1 - 3.5: Statorzähne
- 4: Kontaktiereinrichtung
- 5: Kontaktleiter
- 5.1 - 5.2: Mittelabschnitte des Kontaktleiters
- 6: Anschlussfahne
- 7: Haken
- 7.1, 7.2: Haken
- 9: Statorwicklung
- 10: Isolierendscheibe
- 11: Zahnisolierabschnitt
- 12: Zahnisolierabschnitt
- 13: Aufnahme
- 14: Drahtwicklungsende
- 15: Rillen
- 16: Mittelabschnitt
- 17: Knick
- 18: erstes Ende
- 19: zweites Ende

## Patentansprüche

1. Statoranordnung (1) für eine elektrische Maschine,
mit einem Statorblechpaket (2),
mit einer Vielzahl von Statorwicklungen (9),
mit einer Kontaktiereinrichtung (4), welche zumindest einen Kontaktleiter (5) aus Blechmaterial aufweist, welcher dazu ausgebildet ist, zumindest zwei Statorwicklungen (9) elektrisch miteinander zu verbinden, wobei ein jeweiliger Kontaktleiter (5) zumindest eine Anschlussfahne (6) zum elektrischen Ankoppeln einer externen Anschlusseinheit an die Kontaktiereinrichtung (4) sowie zumindest einen Haken (7) zum Aufnehmen eines Wicklungsdrahtendes (14) einer jeweils mit dem Kontaktleiter (5) elektrisch verbundenen Statorwicklung (9) aufweist, **gekennzeichnet dadurch, dass** der Haken (7) durch erstes Falten des Blechmaterials des Kontaktleiters (5) zur Verdopplung der Dicke des Blechmaterials des Kontaktleiters (5), und durch zweites Falten des Blechmaterials zur Ausbildung der Kontur des Hakens (7) ausgebildet ist.

2. Statoranordnung nach Anspruch 1,
**dadurch gekennzeichnet,**
**dass** ein jeweiliges Wicklungsdrahtende (14) kraftschlüssig und/oder formschlüssig in einen dem Wicklungsdrahtende (14) zugeordneten Haken (7) eingeklemmt ist.

3. Statoranordnung nach einem der vorhergehenden Ansprüche,
**dadurch gekennzeichnet,**
**dass** das Wicklungsdrahtende (14) mit dem Haken (7) heißverstemmt ist.

4. Statoranordnung nach einem der vorhergehenden Ansprüche,
**dadurch gekennzeichnet,**
**dass** ein jeweiliger Kontaktleiter (5) zumindest zwei Haken (7) aufweist.

5. Statoranordnung nach einem der vorhergehenden Ansprüche,
**dadurch gekennzeichnet,**
**dass** der Haken (7) an der Anschlussfahne (6) ausgebildet ist.

6. Statoranordnung nach einem der vorhergehenden Ansprüche,
**dadurch gekennzeichnet,**
**dass** die Kontaktiereinrichtung (4) ein Trägerteil zu Aufnahme der Kontaktleiter aufweist, welches aus einem Kunststoff ausgebildet ist.

7. Statoranordnung nach einem der vorhergehenden Ansprüche,
**dadurch gekennzeichnet,**
**dass** das Statorblechpaket (2) eine Vielzahl von Statorzähnen (3) ausbildet, auf denen eine Vielzahl von Statorwicklungen (9) vorgesehen ist, wobei die Kontaktiereinrichtung (4) und eine Isolierendscheibe (10) vorgesehen sind, welche die Statorzähne mittels an der Kontaktiereinrichtung (4) und der Isolierendscheibe (10) ausgebildeten Zahnisolierabschnitte (11, 12) bedecken und isolieren, wobei der Zahnisolierabschnitt (11) Rillen (15) in Wicklungsrichtung des jeweiligen Wicklungsdrahts aufweisen, welche ein Verrutschen der Statorwicklung (9) vom jeweiligen Statorzahn (3) verhindern.

8. Elektrische Maschine,
- mit einer Statoranordnung (1) nach einem der vorhergehenden Ansprüche und
- mit einem innerhalb einer zylinderförmigen Ausnehmung der Statoranordnung (1) angeordneten und drehbar gelagerten Rotor.

## Claims

1. Stator arrangement (1) for an electrical machine,
comprising a laminated stator core (2),
comprising a plurality of stator windings (9),
comprising a contacting device (4), which has at least one contact conductor (5) of sheet metal material, which is formed for electrically interconnecting at least two stator windings (9), each contact conductor (5) having at least one terminal lug (6), for electrically coupling an external terminal unit to the contacting device (4), and at least one hook (7), for receiving a winding wire end (14) of an associated stator winding (9) which is electrically connected to the contact conductor (5),
**characterised in that** the hook (7) is formed by first folding of the sheet metal material of the contact conductor (5) to double the thickness of the sheet metal material of the contact conductor (5) and by second folding of the sheet metal material to form the contour of the hook (7).

2. Stator arrangement according to claim 1, **characterised in that** each winding wire end (14) is positively and/or non-positively gripped in a hook (7) assigned to the winding wire end (14).

3. Stator arrangement according to any of the preceding claims, **characterised in that** the winding wire end (14) is heat-staked to the hook (7).

4. Stator arrangement according to any of the preceding claims, **characterised in that** each contact conductor (5) has at least two hooks (7).

5. Stator arrangement according to any of the preceding claims, **characterised in that** the hook (7) is formed on the terminal lug (6).

6. Stator arrangement according to any of the preceding claims, **characterised in that** the contacting device (4) has a carrier part, formed from a plastics material, for receiving the contact conductor.

7. Stator arrangement according to any of the preceding claims, **characterised in that** the laminated stator core (2) forms a plurality of stator teeth (3), on which a plurality of stator windings (9) are provided, the contacting device (4) and an insulating end plate (10) being provided, which cover and insulate the stator teeth by means of tooth insulating portions (11, 12) formed on the contacting device (4) and on the insulating end plate (10), the tooth insulating portion (11) having grooves (15) in the winding direction of the associated winding wire which prevent the stator winding (9) from slipping off the associated stator tooth (3).

8. Electrical machine comprising
- a stator arrangement (1) according to any of the preceding claims and
- a rotor which is arranged inside a cylindrical recess in the stator arrangement (1) and mounted rotatably.

## Revendications

1. Système de stator (1) pour une machine électrique, comportant un empilage de tôles de stator (2),
comportant une pluralité d'enroulements de stator (9), comportant un dispositif de mise en contact (4), lequel comporte au moins un conducteur de contact (5) en tôle, lequel est réalisé pour relier électriquement l'un à l'autre au moins deux enroulements de stator (9), dans lequel un conducteur de contact (5) respectif comporte au moins une languette de raccordement (6) pour coupler électriquement une unité de raccordement au dispositif de mise en contact (4) ainsi qu'au moins un crochet (7) pour recevoir une extrémité de fil d'enroulement (14) d'un enroulement de stator (9) respectif relié électriquement au conducteur de contact (5), **caractérisé en ce que** le crochet (7) est réalisé par un premier pli de la tôle du conducteur de contact (5) afin de doubler l'épaisseur de la tôle du conducteur de contact (5), et par un deuxième pli de la tôle afin de réaliser le contour du crochet (7).

2. Système de stator selon la revendication 1, **caractérisé en ce qu'**une extrémité respective de fil d'enroulement (14) est bloquée par engagement de force et/ou par complémentarité de formes dans un crochet (7) ordonné à l'extrémité de fil d'enroulement (14).

3. Système de stator selon l'une des revendications précédentes, **caractérisé en ce que** l'extrémité de fil d'enroulement (14) est sertie à chaud avec le crochet (7).

4. Système de stator selon l'une des revendications précédentes, **caractérisé en ce qu'**un conducteur de contact respectif (5) comporte au moins deux crochets (7).

5. Système de stator selon l'une des revendications précédentes, **caractérisé en ce que** le crochet (7) est réalisé sur la languette de raccordement (6).

6. Système de stator selon l'une des revendications précédentes, **caractérisé en ce que** le dispositif de mise en contact (4) comporte une pièce de support pour recevoir le conducteur de contact, laquelle est réalisée en plastique.

7. Système de stator selon l'une des revendications précédentes, **caractérisé en ce que** l'empilage de tôles de stator (2) forme une pluralité de dents de stator (3), sur lesquelles est prévue une pluralité d'enroulements de stator (9), dans lequel le dispositif de mise en contact (4) et un disque isolant (10) sont prévus, lesquels recouvrent et isolent les dents de stator au moyen de sections d'isolation de dents (11, 12) réalisée sur le dispositif de mise en contact (4) et sur le disque isolant (10), dans lequel la section d'isolation de dents (11) comporte des sillons (15) dans la direction d'enroulement du fil d'enroulement respectif, lesquels empêchent l'enroulement de stator (9) de glisser de la dent de stator respective (3).

8. Machine électrique comportant :
- un système de stator (1) selon l'une des revendications précédentes et
- un rotor disposé en rotation et agencé à l'intérieur d'un évidement cylindrique du système de stator (1).
